**Europäisches Patentamt**

**European Patent Office**

**Office européen des brevets**

(19)

(11) Veröffentlichungsnummer : **0 417 351 B1**

(12)

# EUROPÄISCHE PATENTSCHRIFT

(45) Veröffentlichungstag der Patentschrift :
**17.06.92 Patentblatt 92/25**

(51) Int. Cl.$^5$ : **F24F 13/075, B60H 1/24**

(21) Anmeldenummer : **89119753.5**

(22) Anmeldetag : **24.10.89**

(54) **Ausströmdüse für Belüftungs- oder Klimaanlagen.**

(30) Priorität : **12.09.89 EP 89116882**

(43) Veröffentlichungstag der Anmeldung :
**20.03.91 Patentblatt 91/12**

(45) Bekanntmachung des Hinweises auf die
Patenterteilung :
**17.06.92 Patentblatt 92/25**

(84) Benannte Vertragsstaaten :
**DE ES FR**

(56) Entgegenhaltungen :
**EP-A- 0 257 500**
**DE-A- 2 003 697**

(56) Entgegenhaltungen :
**FR-A- 2 616 386**
**US-A- 3 063 357**
**PATENT ABSTRACTS OF JAPAN, BAnd 8, Nr.
26 (M-273)(1463), 3. Februar 1984; & JP-
A-58184439 (NISSAN JIDOSHA K.K.)**

(73) Patentinhaber : **SIEMENS
AKTIENGESELLSCHAFT
Wittelsbacherplatz 2
W-8000 München 2 (DE)**

(72) Erfinder : **Soethout, Freddie
Am Blauen Stein 6
W-5024 Pulheim 2 (DE)**
Erfinder : **Prause, Martin, Dipl.-Ing. (FH)
Teichbergweg 1
W-8630 Coburg (DE)**

## Beschreibung

Die Erfindung bezieht sich auf eine Ausströmdüse für Belüftungs- oder Klimaanlagen gemäß Oberbegriff des Anspruchs 1; eine derartige Ausströmdüse ist durch die EP-A 0 257 500 bekannt.

Bei der vorgenannten bekannten Ausströmdüse werden die Richtlamellen über eine Kulissenwalze verschwenkt, die in den Seitenwänden des Düsengehäuses parallel zu den Richtlamellen drehbar und axial verschiebbar gelagert ist; je nach Schwenkstellung verschiebt sich die Kulissenwalze und das sie betätigende Bedienelement mehr oder weniger in axialer Richtung.

In einem weiterhin bekannten Fall mit nur paralleler Verstellung der Richtlamellen sind diese über randseitige Zapfen an ihren Vorderkanten in den Seitenwandungen des Ausströmdüsengehäuses schwenkbar gelagert. Die Rückkanten der Richtlamellen sind durch ein Kuppelteil derart miteinander verbunden, daß bei Verschwenkung einer Richtlamelle durch einen an dessen Vorderkante angebrachten Bedienknopf die übrigen Richtlamellen zueinander parallel derart mitverstellbar sind, daß die geförderte Luft entweder in die Kopfebene der Fahrzeuginsassen bzw. in den Fußraum des Fahrzeuginnenraums oder in eine sogenannte Mittelebene, gegebenenfalls mit möglichen Zwischenstellungen, als gezielter Richtstrahl ausströmen kann.

Ausgehend von einer Ausströmdüse der eingangs genannten Art kann eine zusätzliche Diffusstellung mit geringem Zusatzaufwand und unter Beibehaltung des zur Verfügung stehenden Einbauraums sowie großer Bedienfreundlichkeit durch die kennzeichnende Lehre gemäß Anspruch 1 erreicht werden.

Eine besonders sichere Funktionstrennung zwischen einer horizontalen Richtstrahlverschwenkung einerseits und einer Diffusströmungsstellung der Richtlamellen andererseits trotz jederzeitiger Übergangsmöglichkeit von der einen Funktion in die andere Funktion kann durch eine derartige Ausbildung der Kulissenbahnen erreicht werden, daß ausgehend von der ersten Stellung des Kulissenschlittens die Rückkanten der Richtlamellen zunächst im Sinne einer horizontalen parallelen Schwenkbarkeit mit entsprechend horizontal verlaufenden Kulissenbahnen geführt sind, die anschließend im Sinne einer Diffusstellung der Richtlamellen bei horizontaler Bewegung des Kulissenschlittens von der Parallelstellung abweichend mit ihren Rückkanten entsprechend diffusstrahlend geführt sind; in der ersten Stellung des Kulissenschlittens können die Richtlamellen ohne Behinderung druch den Kulissenschlitten, der hierbei nur die Funktion des durch die zuvor zweitgenannte bekannte Lösung üblichen Kuppelteils übernimmt, von einem an der Vorderkante einer Richtlamelle angebrachten Bedienknopfes parallel verschwenkt werden.

Die komfortsteigernde Diffusströmung kann nach einer Ausgestaltung der Erfindung mit einfachen Mitteln dadurch noch weiter verbessert werden, daß in den Randbereichen des Ausströmungsgehäuses Zusatzlamellen ober- bzw. unterhalb der Richtlamellen derart schwenkbar angeordnet sind, daß der die Ausströmdüse durchströmende Luftstrom an der Vorder- bzw. Unterkante des Ausströmdüsengehäuses im Sinne einer Diffuswirkung nach außen von der horizontalen Richtstrahlrichtung abweichend umgelenkt wird.

Zur Bedienung des Kulissenschlittens ist in besonders kompakter und bedienfreundlicher Anordnung ein Drehbedienknopf vorgesehen, dessen Drehbewegung durch einen an sich bekannten integrierten Kurbeltrieb in die Horizontalbewegung des Kulissenschlittens umgesetzt wird; in designfreundlicher und kompakter Bauweise ist der Drehbedienknopf seitlich der Richtlamellen innerhalb des an sich vorhandenen und unverändert bleibenden Ausströmdüsengehäuses zusätzlich angeordnet. Durch den Drehbedienknopf können in weiterer vorteilhafter und kompakter Bauweise auch die Zusatzlamellen über einen Ritzelantrieb in Schwenkmitnahme stehen, der radial außerhalb des Kurbelantriebs für den Kulissenschlitten unter weiterer Ausnutzung des an sich vorhandenen Einbauraums zweckmäßigerweise angeordnet ist.

Die Erfindung sowie weitere vorteilhafte Ausgestaltungen der Erfindung werden im folgenden anhand eines schematisch dargestellten Ausführungsbeispieles näher erläutert; darin zeigen:

FIG 1 in einem Schnittbild gemäß Schnittverlauf II-II in FIG 4 die Draufsicht auf die randseitige Kulissenführung der Richtlamellen in einem Kulissenschlitten bei Richtstrahlstellung des Kulissenschlittens,

FIG 2 die Anordnung gemäß FIG 1 bei Diffusströmungsstellung des Kulissenschlittens,

FIG 3 in einem Schnittbild gemäß Schnittverlauf III-III in FIG 4 die axiale Draufsicht auf einen sowohl den Kulissenschlitten als auch die Zusatzlamellen betätigenden Drehbedienknopf,

FIG 4 eine vertikale Draufsicht auf einen Teil der Ausströmdüse bei im oberen Teil geöffnetem bzw. geschnittenem Ausströmdüsengehäuse.

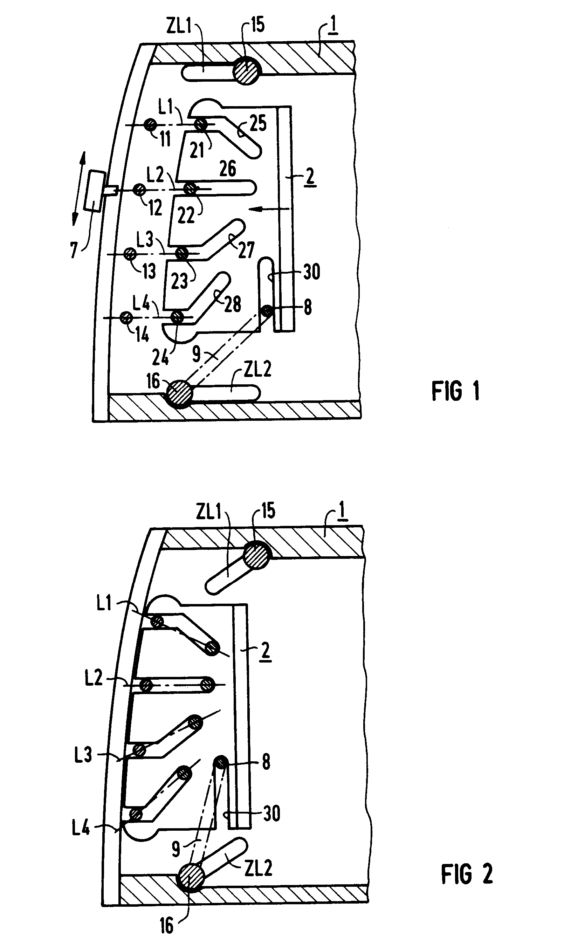

Gemäß FIG 1 ist an der einen Randseite von vier hier nur der Deutlichkeit halber strichpunktiert in waagrechter paralleler Richtstrahlstellung angedeuteten Richtlamellen L1-L4 ein Kulissenschlitten 2 horizontal und vertikal verschiebbar in seiner einen Endstellung, der Richtstrahlstellung angeordnet. Die Richtlamellen L1-L4 sind an ihrer Vorkerkante über Drehzapfen 11-14 in einem Wandteil des Ausströmdüsengehäuses 1 um horizontale Schwenkachsen schwenkbar gelagert. Die Rückkanten der Richtlamellen L1-L4 sind mit im Bereich der Rückkanten vorgesehenen randseitigen Zapfen 21-24 in Kulissenbahnen 25-28 des Kulissenschlittens 2 derart geführt, daß sie in der dargestellten ersten Ausgangsstellung des Kulissenschlittens durch dessen vertikale Bewegung parallel zueinander im Sinne einer veränderbaren Richtstrahlung des von der rechten Seite eintretenden Luftstromes an der linken Vorderseite der Ausströmdüse einstellbar sind. Zur Bedienung einer solchen unterschiedlichen Richtstrahlung dient ein z.B. an der Richtlamelle 2 auf der linken Seite aufgesteckter Bedienknopf 7, durch dessen Auf-Ab-Bewegung die Richtlamelle L2 und über deren Ankupplung über den Kulissenschlitten 2 auch die übrigen Richtlamellen L1;L3;L4 parallel zueinander derart verstellbar sind, daß der von rechts in die Ausströmdüse eintretende Luftstrom entsprechend der jeweiligen Parallelstellung der Richtlamellen L1-L4 nach oben, in die Mittelebene oder nach unten in den Fußraum mit gegebenenfalls möglichen Zwischenstellungen gezielt an der linken Ausströmseite in den Fahrgastraum eines Fahrzeuges austreten kann.

Bei einer Bewegung des Kulissenschlittens 2 aus der in FIG 1 dargestellten ersten Richtstrahl-Endstellung in die in FIG 2 dargestellte zweite Diffusströmungs-Endstellung werden die Zapfen 21-24 der Richtlamellen L1-L4 durch die entsprechende Ausgestaltung der Kulissenbahn 25-28 in eine Diffusströmungsstellung gebracht, bei der weiterhin ein maximaler Luftstrom austritt, dieser jedoch nicht in einer vom Fahrgast allgemein als unkomfortabel empfundenen Weise als gezielter Strahl, sondern als diffus verteilte Luftströmung in den Fahrgastinnenraum eintritt.

Wie aus FIG 1 bzw. FIG 2 ersichtlich, sind in vorteilhafter Weise die Kulissenbahnen derart ausgebildet, daß ausgehend von der ersten Stellung des Kulissenschlittens 2 gemäß FIG 1 die Rückkanten der Richtlamellen L1-L4 zunächst im Sinne einer horizontal parallelen Schwenkbarkeit durch eine entsprechende Raststellung, vorzugsweise durch zunächst parallel verlaufende Kurvenbahnen, geführt sind, so daß in dieser ersten Ausgangsstellung mit Sicherheit eine parallele Schwenkbarkeit im Sinne einer Strahlungsrichtungsänderung gewährleistet ist.

Nach einer Ausgestaltung der Erfindung sind bei Ausnutzung des an sich vorhandenen Einbauraums in vorteilhafter Weise zusätzlich Zusatzlamellen ZL1 und ZL2 oberhalb und unterhalb der Richtlamellen L1;L4 mittel- oder unmittelbar am Ausströmdüsengehäuse 1 in Drehpunktlagerungen 15,16 derart schwenkbar gelagert, daß sie bei der Richtstrahlstellung des Kulissenschlittens 2 gemäß FIG 1 strömungstechnisch ohne Wirkung und bei der Diffusströmungsstellung des Kulissenschlittens 2 gemäß FIG 2 derart in den Luftströmungsraum der Ausströmdüse eingeschwenkt sind, daß die von rechts eintreffende Luftströmung im Sinne einer zusätzlichen Diffusablenkung um die obere und untere Ausströmkante des Ausströmdüsengehäuses 1 umgelenkt und insgesamt eine optimale Diffus-Strömungscharakteristik erreicht wird.

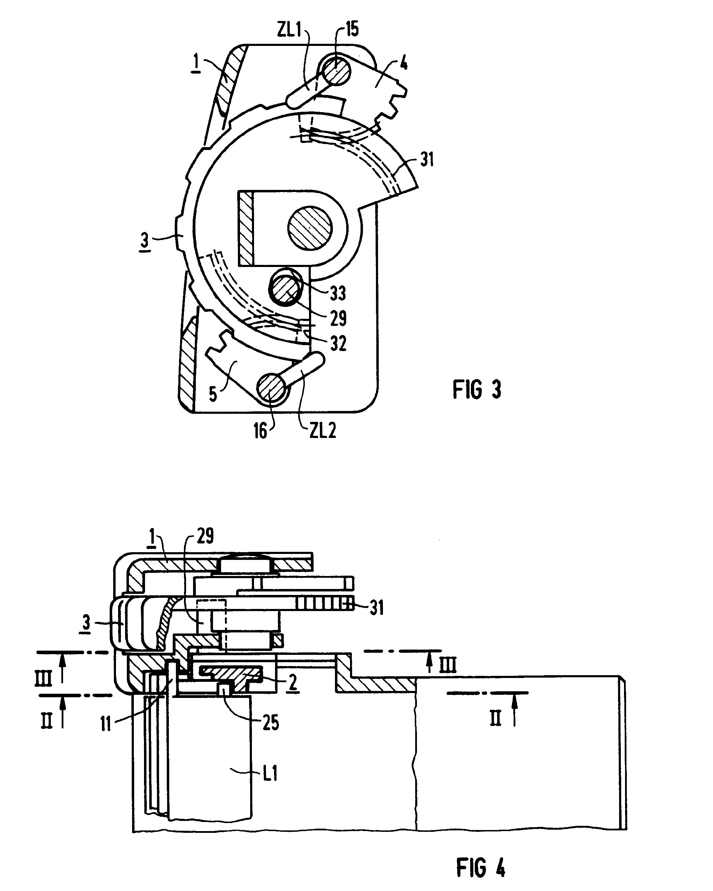

Zur Betätigung des Kulissenschlittens 2 in der horizontalen Verstellung von der ersten Richtstrahlstellung gemäß FIG 1 in die zweite Diffusstellung gemäß FIG 2 dient nach einer Ausgestaltung der Erfindung ein in FIG 3,4 näher dargestellter Drehbedienknopf 3, dessen Drehbewegung durch einen an sich bekannten Kurbeltrieb in eine translatorische Bewegung des Kulissenschlittens 2 umgesetzt wird. Dazu dient in Drehbedienknopf 3 eine Mitnahmelanglochöffnung 33, in die ein Mitnahmezapfen 29 des Kulissenschlittens 2 eingreift. In besonders vorteilhafter Weise kann ohne Inanspruchnahme eines zusätzlichen Einbauraums und damit der Notwendigkeit der Vergrößerung des Ausströmdüsengehäuses eine Verschwenkung der Zusatzlamellen ZL1 und ZL2 durch den Drehbedienknopf dadurch erreicht werden, daß dieser gemäß FIG 3,4 ein Ritzel mit einer Ritzelzahnung 31,32 für korrespondierende Ritzelrad-Mitnahmesegmente 4,5 aufweist, die in Schwenkmitnahme mit den Zusatzlamellen ZL1 bzw.ZL2 um die Drehpunktlagerung 15,16 schwenkbar sind. Die Schwenkmitnahme liegt dabei radial außerhalb der Mitnahme des Kulissenschlittens 2 und erfordert daher keine zusätzliche Einbaubreite.

In konstruktiv noch einfacherer, jedoch voll betriebstüchtiger Weise kann eine Verschwenkung der Zusatzlamellen nach einer in FIG 1,2 für die Zusatzlamelle LZ2 angedeuteten Ausgestaltung der Erfindung dadurch erreicht werden, daß die Zusatzlamellen über eine zusätzliche Kulissenführung, insbesondere einer zusätzlichen Kulissenführung in dem Kulissenschlitten 2 bei dessen linearer Betätigung in Schwenkmitnahme gestellt sind; dazu ist in FIG 1,2 im Kulissenschlitten 2 eine zusätzliche Kulissenbahn 30 vorgesehen, in der ein Führungsstift 8 gleitend angeordnet ist, der über eine Kuppelstange 9 in Schwenkmitnahme mit der Zusatzlamelle LZ2 steht. Bei fester Verbindung zwischen der Kuppelstange 9 mit der Zusatzlamelle LZ2 einerseits und dem Führungsstift 8 andererseits muß letzterer drehbar, z.B. aufgrund eines runden Querschnitts, relativ zur Kulissenbahn 30 sein; andernfalls ist eine Gelenkverbindung zwischen der Kuppelstange 9 und dem Führungsstift 8 vorgesehen. Bei der Schubbewegung des Kulissenschlittens 2 von der Stellung gemäß FIG 1 in die Stellung gemäß FIG 2 wird der Führungsstift 8 in der Kulissenbahn 30 nach oben bewegt und verschwenkt dabei die Zusatzlamelle LZ2 über die Kuppelstange 9 in ihre Diffusstellung gemäß FIG 2.

Unter weitgehender Beibehaltung des Designs des an sich bekannten, mit vorliegender Erfindung vorteilhaft ergänzten Ausströmdüsengehäuses und unter Beibehaltung dessen Einbaumaße ist der Drehbedienknopf 3 auf der einen Randseite der Richtlamellen L1-L2 in das an sich vorhandene Ausströmdüsengehäuse 1 integriert. Auf der anderen Randseite der Richtlamellen L1-L4 kann dann in hier nicht näher dargestellter Weise ein korrespondierender Drehbedienknopf, z.B. zur Verstellung einer Seitenrichtstrahlwirkung des Luftstromes mit zusätzlichen, hinter den horizontal angeordneten Richtlamellen L1-L4 vorgesehenen vertikel angeordneten und verstellbaren Richtlamellen vorgesehen werden.

## Patentansprüche

1. Ausströmdüse für Belüftungs- oder Klimaanlagen, insbesondere in Kraftfahrzeugen, mit mehreren, jeweils um eine parallel zur ausströmseitigen Vorderkante verlaufende Schwenkachse schwenkbaren und im Bereich ihrer einströmseitigen Rückkante über Kulissenführungen eines Kuppelteils in gegenseitiger Schwenkmitnahme zwischen einer parallelen Richtstrahlstellung und einer Diffusströmungsstellung stehenden Richtlamellen (L1-L4), **dadurch gekennzeichnet** , daß als Kuppelteil ein in Achsrichtung der Ausströmdüse verschiebbarer flacher Kulissenschlitten (2) mit in seiner Fläche verlaufenden Kulissenbahnen (25 - 28) zur Schwenkmitnahme der Richtlamellen (L1-L4) vorgesehen ist.

2. Ausströmdüse mit im Bereich ihrer Vorderkanten um jeweils eine horizontale Schwenkachse parallel und in konstantem Abstand zueinander schwenkbar gelagerten Richtlamellen (L1-L4) nach Anspruch 1, **dadurch gekennzeichnet,** daß als Kuppelteil ein horizontal und vertikal verschiebbarer, flacher Kulissenschlitten (2) mit derartigen in seiner Fläche verlaufenden Kulissenbahnen (25-28) für die Richtlamellen (L1-L4) vorgesehen ist, daß die Richtlamellen (L1-L4) in einer ersten Stellung des Kulissenschlittens (2) in paralleler Richtstrahlstellung mit zueinander paralleler Schwenkbarkeit und bei horizontaler Bewegung des Kulissenschlittens (2) entsprechend der jeweiligen Kulissenbahnführung in jeweiliger Diffusströmungsstellung geführt sind.

3. Ausströmdüse nach Anspruch 2, **gekennzeichnet** durch eine derartige Ausbildung der Kulissenbahnen (25-28), daß ausgehend von der ersten Stellung des Kulissenschlittens (2) die Rückkanten der Richtlamellen (L1-L4) zunächst im Sinne einer horizontal parallelen Schwenkbarkeit geführt sind.

4. Ausströmdüse nach Anspruch 2, **gekennzeichnet** durch beidrandseitige Zapfenlagerung (Zapfen 11-14) der Vorderkante der Richtlamellen (L1-L4) in jeweils einer Seitenwand des Ausströmdüsengehäuses (1) und zumindest eine randseitige Zapfenführung (Zapfen 21-24) der Rückkante der Richtlamellen (L1-L4) in dem in einer Seitenwand des Ausströmdüsengehäuses (1) horizontal und vertikal führbaren Kulissenschlittens (2).

5. Ausströmdüse nach einem der Ansprüche 1 bis 4, **gekennzeichnet** durch bei Diffusströmungsstellung der Richtlamellen (L1-L4) in den Luftstrom im Sinne einer Erhöhung der Diffusströmungswirkung aus dem Bereich der Gehäusewandung des Ausströmdüsengehäuses (1) ober- bzw. unterhalb der Richtlamellen (L1-L4) schwenkbare Zusatzlamellen (LZ1;LZ2).

6. Ausströmdüse nach Anspruch 5, **dadurch gekennzeichnet**, daß der Kulissenschlitten (2) über einen Kurbeltrieb von einem Drehbedienknopf (3) horizontal verschiebbar ist. (FIG 3,4)

7. Ausströmdüse nach Anspruch 5, **dadurch gekennzeichnet**, daß die Zusatzlamellen (z.B.LZ2) über eine Kulissenführung, insbesondere einer zusätzlichen Kulissenführung (Kulissenbahn 30) in dem Kulissenschlitten (2) in Schwenkmitnahme stehen. (FIG 1,2)

8. Ausströmdüse nach Anspruch 7, **dadurch gekennzeichnet**, daß der Drehbedienknopf (3) seitlich der Richtlamellen (L1-L4) innerhalb des Ausströmdüsengehäuses (1) angeordnet ist.

9. Ausströmdüse nach Anspruch 6 und 7, **dadurch gekennzeichnet**, daß die Zusatzlamellen über einen Ritzelantrieb mit dem Drehbedienknopf (3) in Schwenkmitnahme stehen.

## Claims

1. Outlet nozzle for ventilation or air-conditioning systems, in particular in motor vehicles, having several directional louvres (L1 - L4) which are respectively able to swivel around a swivel axis extending parallel to the front edge on the outlet side and which are coupled to each other in swivelling manner in the region of their rear edge on the inlet side by way of crank guides of a coupling element, between a parallel directed flow setting and a diffused flow setting, **characterised in that** there is provided as coupling element a flat crank carriage (2) which can be displaced in the axial direction of the outlet nozzle and includes crankways (25 - 28) extending along its surface for coupling the directional louvres (L1 - L4) in swivelling manner.

2. Outlet nozzle comprising, in the region of its front edges, directional louvres (L1 - L4) according to claim 1, which directional louvres are swivel-mounted parallel around a respective horizontal swivel axis and at a constant distance from each other, **characterised in that** there is provided as coupling element a flat crank carriage (2) which can be displaced horizontally and vertically and has crankways (25 - 28) extending along its surface for the directional louvres (L1 - L4) so that the directional louvres (L1 - L4) are guided into a first setting of the crank carriage (2) in a parallel directed flow setting with the ability to swivel parallel to each other and are guided during horizontal movement of the crank carriage (2) into the respective diffused flow setting according to the guidance of the respective crankway.

3. Outlet nozzle according to claim 2, **characterised by** a construction of the crankways (25 - 28) such that, starting from the first position of the crank carriage (2), the rear edges of the directional louvres (L1 - L4) are guided first so that they can be swivelled in a horizontal parallel sense.

4. Outlet nozzle according to claim 2, **characterised by** journal mounting (journals 11 - 14) of both sides of the front edge of the directional louvres (L1 - L4) in a respective side wall of the outlet nozzle housing (1) and at least one marginal journal guide (journals 21 - 24) for the rear edge of the directional louvres (L1 - L4) in the crank carriage (2), which crank carriage can be guided horizontally and vertically in a side wall of the outlet nozzle housing (1).

5. Outlet nozzle according to one of claims 1 to 4, **characterised by** additional louvres (LZ1; LZ2) which can be swivelled, in the diffused flow setting of the directional louvres (L1 - L4), into the air current to achieve an increase in the diffused flow effect from the region of the housing wall of the outlet nozzle housing (1) above and below the directional louvres (L1 - L4).

6. Outlet nozzle according to claim 5, **characterised in that** the crank carriage (2) can be displaced horizontally by a rotary control knob (3) by way of a crank gear. (Figures 3, 4)

7. Outlet nozzle according to claim 5, **characterised in that** the additional louvres (for example, LZ2) are coupled in swivelling manner by way of a crank guide, in particular by way of an additional crank guide (crankway 30), in the crank carriage (2). (Figures 1, 2)

8. Outlet nozzle according to claim 7, **characterised in that** the rotary control knob (3) is arranged to the side of the directional louvres (L1 - L4) within the outlet nozzle housing (1).

9. Outlet nozzle according to claims 6 and 7, **characterised in that** the additional louvres are coupled to the rotary control knob (3) in swivelling manner by way of a pinion drive.


**Revendications**

1. Buse d'éjection pour des installations d'aération ou de climatisation, notamment dans des véhicules automobiles, comportant plusieurs lamelles directrices (L1-L4), qui peuvent pivoter autour d'axes de pivotement respectifs, parallèles au bord avant situé côté éjection, et disposées, au niveau de leur bord arrière situé côté entrée, de manière à être entraînées selon un mouvement de pivotement en sens opposé, par l'intermédiaire de guides de coulisse d'une pièce d'accouplement, entre une position parallèle au jet dirigé et une position d'écoulement diffus, caractérisée par le fait qu'il est prévu comme pièce d'accouplement un chariot plat à coulisses (2), déplaçable dans la direction axiale de la buse d'éjection et comportant des voies de coulisses (25-28) ménagées dans la surface du chariot et servant' à entraîner selon un mouvement de pivotement les lamelles directrices (L1-L4).

2. Buse d'éjection comportant des lamelles directrices (L1-L4) montées, au niveau de leurs bords avant, de manière à pouvoir pivoter parallèlement entre elles et à distance constante les unes des autres autour d'axes horizontaux respectifs de pivotement, selon la revendication 1, caractérisée par le fait qu'il est prévu, comme pièce d'accouplement, un chariot plat à coulisses (2), déplaçable horizontalement et verticalement et comportant des voies de coulisse (25-28) qui sont ménagées dans la surface du chariot, pour les lamelles directrices (L1-L4) de telle sorte que, dans une première position du chariot à coulisses (2), les lamelles directrices (L1-L4) sont guidées dans une position parallèle de jet directeur, avec une possibilité de pivotement parallèle entre elles, et, lors d'un déplacement horizontal du chariot à coulisses (2), sont guidées conformément au guide respectif de la voie de coulisse, dans une position respective d'écoulement diffus.

3. Buse d'éjection suivant la revendication 2, caractérisée par une réalisation telle des voies de coulisse (25-28) qu'à partir de la première position du chariot à coulisses (2), les bords arrière des lamelles directrices (L1-L4) sont tout d'abord guidés dans le sens d'une possibilité de pivotement parallèle horizontal.

4. Buse d'éjection suivant la revendication 2, caractérisée par le tourillonnement bilatéral sur pivots (pivots 11-14) des bords avant des lamelles directrices (L1-L4) respectivement dans une paroi latérale du carter (1) de la buse d'éjection, et au moins un tourillonnement latéral sur pivots (pivots 21-24) du bord arrière des lamelles directrices (L1-L4) dans le chariot à coulisses (2) déplaçable horizontalement et verticalement dans une paroi latérale du carter (1) de la buse d'éjection.

5. Buse d'éjection suivant l'une des revendications 1 à 4, caractérisée par des lamelles supplémentaires (LZ1; LZ2) qui, dans le cas où les lamelles directrices (L1-L4) sont situées dans une position d'écoulement diffus dans le courant d'air, peuvent pivoter, dans le sens d'un accroissement de l'effet d'écoulement diffus, à partir de la zone de la paroi du carter (1) de la buse d'éjection au-dessus et au-dessous des lamelles directrices (L1-L4).

6. Buse d'éjection suivant la revendication 5, caractérisée par le fait que le chariot à coulisses (2) peut être déplacé horizontalement par l'intermédiaire d'un dispositif d'entraînement à manivelle par un bouton rotatif de commande (3). (Figures 3,4).

7. Buse d'éjection suivant la revendication 5, caractérisée par le fait que les lamelles supplémentaires (par exemple LZ2) sont entraînées selon un mouvement de pivotement par l'intermédiaire d'un guide de coulisse, notamment d'un guide de coulisse supplémentaire (voie de coulisse 30) dans le chariot porte-coulisses (2). (figures 1, 2).

8. Buse d'éjection suivant la revendication 7, caractérisée par le fait que le bouton de commande rotatif (3) est disposé latéralement par rapport aux lamelles directrices (L1-L4) à l'intérieur du carter (1) de la buse d'éjection.

9. Buse d'éjection suivant les revendications 6 et 7, caractérisée par le fait que les lamelles supplémentaires sont entraînées en rotation par l'intermédiaire d'un dispositif d'entraînement à pignons au moyen du bouton de commande rotatif (3).

**FIG 1**

**FIG 2**

FIG 3

FIG 4